# EUROPEAN PATENT APPLICATION

(11) **EP 3 644 594 A1**
(43) Date of publication of application: **29.04.2020**
(21) Application number: 19203031.0
(22) Date of filing: 14.10.2019
(51) Int. Cl.: H04N 1/00, G06F 3/12

(54) **IMAGE PROCESSING APPARATUS AND NON-TEMPORARY COMPUTER READABLE STORAGE MEDIUM STORING PROGRAM FOR MOBILE TERMINAL**

(30) Priority: 26.10.2018 US 201816171429
(71) Applicant: Toshiba TEC Kabushiki Kaisha, Shinagawa-ku Tokyo 141-8562 (JP)
(72) Inventor: ISHIDA, Tetsuya, Shinagawa-ku,, Tokyo 141-8562 (JP)
(74) Representative: Bandpay & Greuter

(57) **Abstract**

According to an embodiment, an image processing apparatus includes a memory, an interface, and a processor. The memory stores a capability file including capability information indicating a value that is capable of being set as a parameter of processing. The interface communicates with a mobile terminal. The processor performs setting based on template information acquired from the mobile terminal, after transmitting the capability file stored in the memory to the mobile terminal communicating via the interface.

## Description

### FIELD

Embodiments described herein relate generally to an image processing apparatus, a non-temporary computer readable storage medium storing a program for a mobile terminal, and methods associated therewith.

### BACKGROUND

A multi-function peripheral (MFP) includes a printer, a scanner, a facsimile, and the like. Values (various setting values) of parameters used for processing such as copying, scanning, printing, and faxing executed by the MFP can be registered as a template. The MFP performs various settings based on the template, whereby a user can simply perform targeted setting (processing) just by designating the template. In addition, in the MFP of the related art, the setting may be performed based on the template supplied from a mobile terminal possessed by the user.

Template to be applied to the MFP is registered based on a value of each parameter which is selected by the user from values that can be set in a specific MFP. Therefore, a value that can be set in an MFP actually used is not limited to the same value as when registering the template held by a mobile terminal. In other words, in the MFP actually used, it may be possible to set a setting value (function) that could not be selected when registering the template held by the mobile terminal. However, in the related art, it is necessary to perform template registration again for updating the present template according to the value that can be set in the MFP actually used.

### SUMMARY OF INVENTION

To solve such problem, there is provided an image processing apparatus, comprising: a memory configured to store a capability file comprising capability information indicating a value that can be set as a parameter of processing; an interface configured to communicate with a mobile terminal; and a processor configured to perform setting based on template information acquired from the mobile terminal, after transmitting the capability file stored in the memory to the mobile terminal via the interface.

Preferably, the interface performs near field communication.

Preferably still, the interface performs contactless communication.

Preferably yet, the processor determines whether or not to transmit the capability file to a mobile terminal which initiates communication via the interface, and if the processor determines to transmit the capability file, the processor transmits the capability file to the mobile terminal via the interface.

Suitably, the apparatus further comprises: a second memory configured to store log information indicating the mobile terminal to which the capability file is already transmitted, wherein the processor determines whether or not to transmit the capability file by determining whether or not the capability file is already transmitted to the mobile terminal that initiates the communication via the interface based on the log information.

The invention also relates to a non-temporary computer readable storage medium storing a program for a mobile terminal, the program causing a processor to: accept designation of template information indicating a value of a parameter set for an image processing apparatus from template information stored in a memory; communicate with the image processing apparatus configured to perform setting based on designated template information; receive a capability file comprising capability information indicating a value that is capable of being set as the parameter of processing executed by the image processing apparatus, from the image processing apparatus; accept a change of the value of the parameter in the template information according to the capability file received from the image processing apparatus; and when the change of the value of the parameter in the template information is instructed, transmit the template information comprising a value of a parameter changed according to the instruction to the image processing apparatus.

Preferably, the program for the mobile terminal further causes a processor to: confirm whether or not to change a value in a parameter in which capability information of a specific image processing apparatus stored in association with the template information and capability information included in the capability file received from the image processing apparatus do not match.

Preferably still, the program for the mobile terminal further causes a processor to: update the template information stored in the memory to the template information comprising the value of the parameter changed according to the instruction, if an image processing apparatus of the capability information stored in association with the template information and an image processing apparatus of a transmission source of the capability file are the same machine.

Preferably yet, the program for a mobile terminal further causes a processor to: register the template information comprising the value of the parameter changed according to the instruction as new template information in the memory, if an image processing apparatus of the capability information stored in association with the template information and an image processing apparatus of a transmission source of the capability file are not the same machine.

Suitably, the program for a mobile terminal further causes a processor to: hold the template information including the value of the parameter changed according to the instruction as temporary template information, if an image processing apparatus of the capability information stored in association with the template information and an image processing apparatus of a transmission source of the capability file are not the same machine.

The invention further relates to an image processing method, comprising: storing in a memory a capability file comprising capability information indicating a value that can be set as a parameter of processing; transmitting the capability file stored in the memory to the mobile terminal; and then setting the value based on template information acquired from the mobile terminal.

Preferably, transmitting the capability file is performed using near field communication.

Preferably still, transmitting the capability file is performed using contactless communication.

Preferably yet, the method further comprises: determining whether or not to transmit the capability file to a mobile terminal which initiates communication; and transmitting the capability file to the mobile terminal.

Suitably, the method further comprises: storing log information indicating the mobile terminal to which the capability file is already transmitted; and determining whether or not to transmit the capability file by determining whether or not the capability file is already transmitted to the mobile terminal that initiates communication based on the log information.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating a configuration example of a digital multifunction peripheral as an image processing apparatus according to an embodiment;
FIG. 2 is a block diagram illustrating a configuration example of a mobile terminal;
FIG. 3 is a diagram illustrating an example of a capability file including capability information held by the digital multifunction peripheral;
FIG. 4 is a diagram illustrating an example of template information held by the mobile terminal;
FIG. 5 is a flowchart for explaining an operation of the mobile terminal;
FIG. 6 is a diagram illustrating a display example of a template selection screen displayed by the mobile terminal;
FIG. 7 is a diagram illustrating a display example of a setting value changeable based on capability information of the digital multifunction peripheral;
FIG. 8 is a diagram illustrating the display example of a setting value changeable based on the capability information; and
FIG. 9 is a flowchart for explaining an operation example of the digital multifunction peripheral.

### DETAILED DESCRIPTION

According to an embodiment, an image processing apparatus includes a memory, an interface, and a processor. The memory stores a capability file including capability information indicating a value that can be set as a parameter of processing. The interface communicates with a mobile terminal. The processor performs setting based on template information acquired from the mobile terminal, after transmitting the capability file stored in the memory to the mobile terminal communicating via the interface.

Hereinafter, an embodiment will be described using drawings.

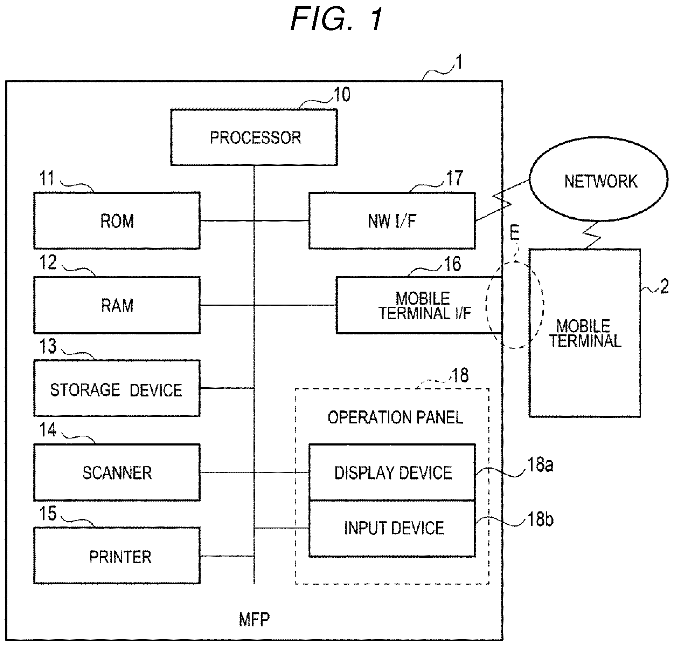

FIG. 1 is a block diagram illustrating a configuration example of a digital multifunction peripheral (MFP) 1 as an image processing apparatus according to an embodiment.

The MFP 1 is an image processing apparatus (such as a printing apparatus, an image reading apparatus, and a copying apparatus) that performs image processing such as printing, scanning, and copying. A mobile terminal 2 is a portable electronic device (such as a mobile phone, a smartphone, or a tablet PC) possessed by a user.

In the embodiment, the MFP 1 includes a mobile terminal interface (a first communication interface) that communicates with the mobile terminal 2. The mobile terminal interface may be any interface as long as the interface can communicate with the mobile terminal 2 possessed by the user. In the embodiment, it is assumed that the mobile terminal interface is an interface (a reader-writer) communicating with the mobile terminal 2 in close to a predetermined position of the MFP 1 in a non-contact (contactless) manner. The contactless communication is to communicate in a close state (for example, a narrow communication area of about several centimeters). For example, as a communication method of the contactless communication, there is a method called near field communication (NFC). In addition, the mobile terminal interface may be the near field communication corresponding to a communication method such as Bluetooth or wireless LAN.

The MFP 1 may have an interface (a second communication interface) that communicates with the mobile terminal 2 by a communication method different from the mobile terminal interface. In the embodiment, it is assumed that the MFP 2 has a network interface that communicates via a network that the mobile terminal 2 accessible, as the second communication interface. The network interface as the second communication interface may be an interface communication connecting to the network by the wireless communication or may be an interface connecting to the network by a wired connection.

Next, a configuration example of the MFP 1 according to the embodiment will be described.

As illustrated in FIG. 1, the MFP 1 includes a processor 10, a ROM 11, a RAM 12, a storage device 13, a scanner 14, a printer 15, a mobile terminal interface (I/F) 16, a network (NW) interface (I/F) 17, an operation panel 18, and the like.

The processor 10 executes a program. The processor 10 is, for example, a central processing unit (CPU). The processor 10 is connected to each unit in the MFP 1 via a bus. The processor 10 executes various kinds of processing by executing the program stored in the ROM 11 or the storage device 13. For example, the processor 10 executes a basic operation control of the MFP 1 by executing the program of the operating system (OS). In addition, the processor 10 executes various kinds of processing by executing an application program designed according to a processing content.

The ROM 11 stores various programs such as an OS program or an application program executed by the processor 10. The RAM 12 is used, for example, as a work area for temporarily storing data to be used.

The storage device 13 is a rewritable nonvolatile memory. For example, the storage device 13 includes a memory device such as a hard disk drive (HDD), a solid state drive (SSD), or an electric erasable programmable read-only memory (EEPROM) (registered trademark). The storage device 13 may store an OS or an application program.

The storage device 13 also stores data to be used in various kinds of processing executed by the processor 10. For example, the storage device 13 stores a capability file including capability information to be described later. The storage device 13 also stores data (for example, log information) generated by the processing executed by the processor 10. For example, the storage device 13 stores log information as history information on communication with the mobile terminal to be described later.

The scanner 14 reads an image of an original document as image data. For example, the scanner 14 optically scans the image of the original document to obtain the image data. In this case, the scanner 14 includes an image pick-up device such as a charge-coupled device (CCD) image sensor, an optical system that guides light from the original document to the image pick-up device, and the like. The scanner 14 may read images by other methods.

The printer 15 prints an image on a recording medium such as paper. The printer 15 is not limited to a configuration of a specific image forming method. For example, the printer 15 may be an electrophotographic method, an ink jet method, or a thermal transfer method. In the embodiment, description will be made by assuming that the printer 15 is an electrophotographic printer.

The mobile terminal interface 16 is an interface that communicates with the mobile terminal 2. The mobile terminal interface 16 is configured of a device that performs near field communication such as contactless communication with the mobile terminal 2 with a predetermined communication range E. For example, the mobile terminal interface 16 is configured of an antenna for near field communication, a communication control circuit, and the like. In the embodiment, it is assumed that the mobile terminal interface 16 is configured of a device (a reader-writer) that performs contactless communication such as the NFC with the communication device 24 of the mobile terminal 2 to be described later. The mobile terminal interface 16 as the reader-writer performs contactless communication with another non-contact communication device (a communication device 24 of the mobile terminal 2) which is in a connected state by electromagnetic coupling via an antenna.

The network interface 17 is an interface (a second communication interface) for communicating via the network. In the embodiment, it is assumed that the second communication interface 17 is an interface for wirelessly communicating with the mobile terminal 2 via the network as a wireless LAN.

The operation panel 18 includes a display device 18a and an input device 18b. The display device 18a displays information. The display device 18a is, for example, a display configured of a liquid crystal display or an organic electro-luminescence (EL) display, or the like. The input device 18b accepts an operation by a user (an operator). The input device 18b is configured to include, for example, a touch panel, a keyboard, a numeric keypad, and the like. For example, the display device 18a and the input device 18b are configured of a display panel having a touch panel.

Next, a configuration of the mobile terminal 2 will be described.

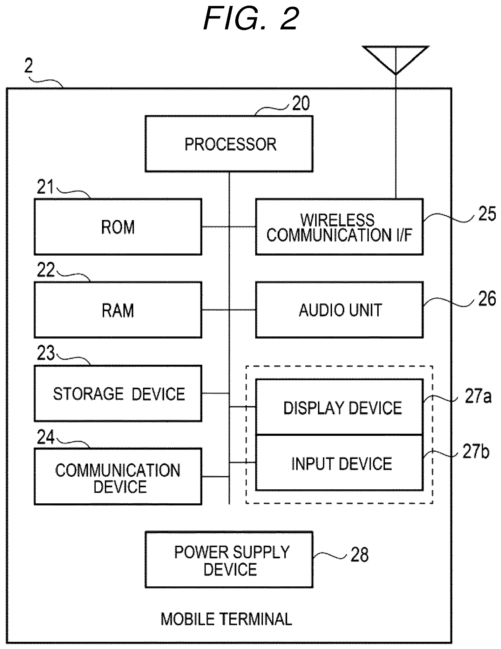

FIG. 2 is a block diagram illustrating a configuration example of the mobile terminal 2 according to the embodiment.

The mobile terminal 2 in the configuration example illustrated in FIG. 2 is a portable electronic device such as a smartphone, a tablet PC, a mobile phone, and a PDA. As illustrated in FIG. 2, the mobile terminal 2 includes a processor 20, a ROM 21, a RAM 22, a storage device 23, a communication device 24, a wireless communication interface (I/F) 25, an audio unit 26, a display device 27a, an input device 27b , a power supply device 28, and the like.

The processor 20 executes a program. The processor 20 is, for example, a CPU. The processor 20 realizes various processing functions by executing a program. The ROM 21 stores various programs such as an OS program or an application program. In addition, the RAM 22 is used, for example, as a work area for temporarily storing data to be used.

The storage device 23 is a rewritable nonvolatile memory to which various data is stored. Various application programs (application), control data, user data, and the like are stored in the storage device 23. For example, the storage device 23 stores an application program to be downloaded via the network or the like by an operation of the user. The processor 20 realizes various functions by executing the application program stored in the storage device 23.

In the embodiment, the storage device 23 stores a program for template management as one of the application programs that the mobile terminal 2 operates in cooperation with the MFP 1. The processor 20 realizes setting of the MFP 1 by the template information to be described later by executing the program for template management. The storage device 23 also stores template information to be supplied to the MFP 1 and capability information corresponding to the template information.

The communication device 24 is an interface for communicating with the mobile terminal interface 16 of the MFP 1. In the embodiment, it is assumed that the communication device 24 is a device that performs the near field communication (for example, contactless communication such as NFC) corresponding to the communication method of the mobile terminal interface 16 of the MFP 1. The communication device 24 performing the contactless communication is configured of an antenna for contactless communication, an IC chip for communication control, and the like. In this case, the communication device 24 performs contactless communication with another non-contact communication device (the mobile terminal interface 16 of the MFP 1) which is in a connected state by electromagnetic coupling via the antenna. For example, the communication device 24 is activated in the communication range E by a radio wave from the mobile terminal I/F 16 to be in a communicable state, and stops if the communication device 24 moves away from the communication range E.

The wireless communication interface 25 is a communication interface for accessing the network. The wireless communication interface 25 is connected to the antenna and configured to wirelessly communicate via the antenna. For example, the wireless communication interface 25 communicates with the MFP 1 via the network. In this case, the mobile terminal 2 may transmit print data and the like to the MFP 1 via the wireless communication interface 25 and the network.

The audio unit 26 inputs and outputs sound. The audio unit 26 includes an analog front end unit, an audio unit, and the like. A speaker, a receiver, a microphone, and the like are connected to the audio unit 26.

The power supply device 28 is configured of, for example, a rechargeable battery or the like. The power supply device 28 supplies power to each unit in the mobile terminal 2.

The display device 27a is configured of a display unit. On and off of the display, display contents, or the like of the display device 27a are controlled by the processor 20. The input device 27b is configured of a touch panel, a keyboard, a numeric keypad, and the like. The input device 27b supplies an operation instruction input by the user to the processor 20. For example, the display device 27a and the input device 27b are configured as a display unit with a touch panel.

Next, the template information supplied from the mobile terminal 2 to the MFP 1 will be described.

The MFP 1 has a function of performing various kinds of setting according to the template information. In the embodiment, the template information is information for holing setting values of a plurality of setting items for the MFP 1. The template information may be held in the storage device 23 of the MFP 1 or may be supplied from an external device such as the mobile terminal 2. However, in the embodiment, a case where the MFP 1 performs various kinds of setting based on the template information supplied from the mobile terminal 2 will be described.

The mobile terminal 2 holds values of various parameters selected from values that can be set in a specific digital multifunction peripheral as the template information in the storage device 23. In this case, the mobile terminal 2 also holds the capability information in the specific digital multifunction peripheral (digital multifunction peripheral when registering) in the storage device 23 in association with the template information. The mobile terminal 2 accepts the designation of the template information by the user and connects to the MFP 1 presented by the user in the communication range E. The mobile terminal 2 confirms the necessity of change to the template information designated by the user with reference to the capability information of an access point, that is, MFP 1. Then, the mobile terminal 2 supplies the template information to the MFP 1. Accordingly, the MFP 1 performs various kinds of settings according to the template information from the mobile terminal 2, and accepts various kinds of processing in a setting state corresponding to the template.

Next, the capability file held by the MFP 1 will be described.

The MFP 1 holds a capability file including capability information indicating a list of values that can be set as the template information. The MFP 1 has a function of providing the capability file to the mobile terminal 2 connected to the mobile terminal I/F 16. MFPs to which template information from the mobile terminal 2 is applicable may have different values that can be set as the template information due to differences in optional equipment, firmware, or the like. For example, although the MFPs are the same model, if the optional equipment, the firmware, or the like are different, values that can be set as the template information are different for each machine. In addition, although the MFPs are the same machine, if there is a change in optional equipment, an update of firmware, or the like, the values that can be set as the template information change.

That is, if the template information held by the mobile terminal 2 is actually applied to the MFP, functions not considered may be available when registering the template information (when creating the template information). In order to present that functions not considered when registering the template information are available, the MFP 1 provides the capability information (a list of values that can be set as the template information) to the mobile terminal 2.

The MFP 1 holds information (capability information) indicating a list of values that can be set as the template information is the storage device 13 as the capability file of a predetermined data format (for example, an XML format). For example, the capability file includes a model name (a name of a kind of machine), a serial number (identification information of a machine), a version of firmware (FW), a parameter name that can be set in the template, a data type, an allowable value, and an explanation of parameter. The capability file differs depending on the model of the MFP, the optional equipment (such as a finisher), and the firmware.

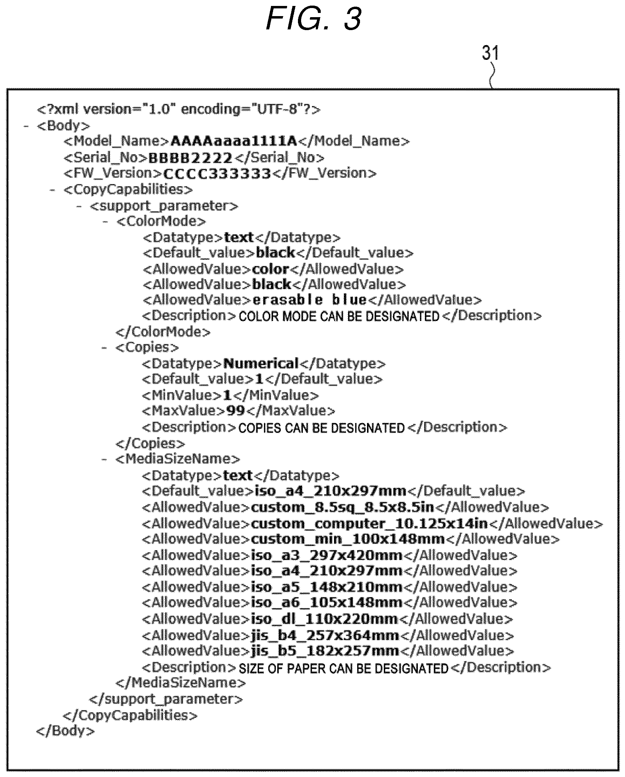

FIG. 3 is an example of a capability file 31 including the capability information of the MFP.

The capability file 31 illustrated in FIG. 3 indicates "model name", "serial number", and "FW version" as the information indicating the MFP. The "model name" is information indicating the model of the MFP. The "serial number" is information indicating identification information on the machine of the MFP. The "FW version" is information indicating the firmware version to be applied to the MFP. In addition, the capability file 31 illustrated in FIG. 3 indicates "ColorMode", "Copies" (number of copies), and "MediaSizeName" (paper size) parameters, as the capability information on copying. For example, the "Color Mode" indicates that a data type is "text", a default is "black", and allowed values are two of "color" and "black". The "Copies" indicates that the data type is "integer", the default is "1", and the allowed values are the minimum "1" and the maximum "99". The "MediaSizeName" indicates that the data type is "text", the default is "iso_a4_210x297 mm", and the allowed values are 10 types illustrated in FIG. 3.

Next, the template held by the mobile terminal 2 will be described.

The mobile terminal 2 manages the template information using application for template management. The template information is configured of information indicating a template name, various parameter values to be set, and the like. In addition, the mobile terminal 2 also holds capability information of the MFP corresponding to the template information, in addition to the template information. For example, the mobile terminal 2 accesses a specific MFP and holds the template information created within a range of values that can be set in the accessed MFP. In this case, the template information held by the mobile terminal 2 is information in which various setting values are designated within the range of values that can be set in the accessed specific MFP. In addition, the mobile terminal 2 may register the template information by importing the template information exported by the accessed MFP.

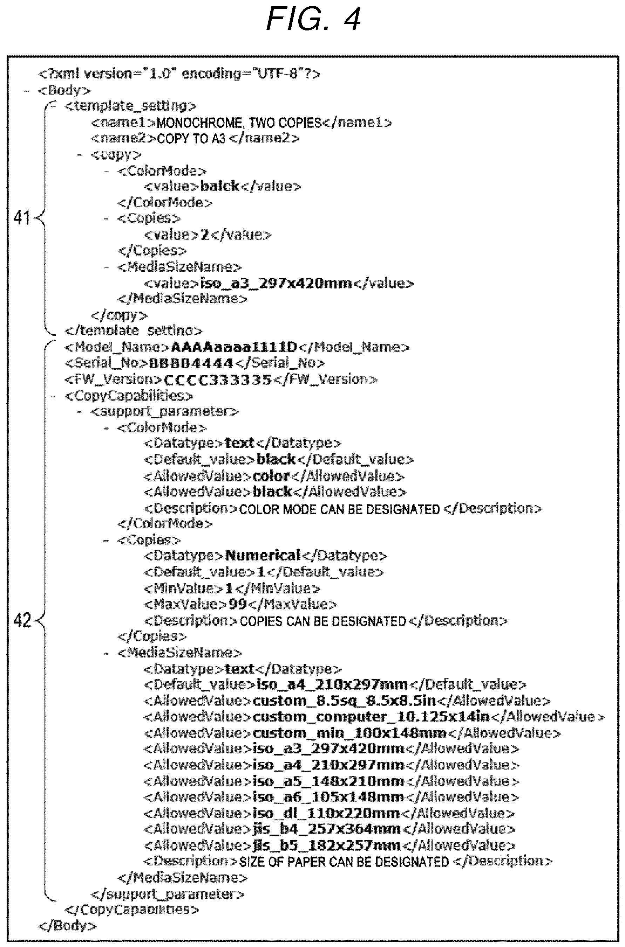

FIG. 4 illustrates an example of template information 41 held by the mobile terminal 2 and capability information 42 corresponding to the template information 41.

The template information 41 illustrated in FIG. 4 is information indicating various setting values related to copying in the MFP. In the template information 41 illustrated in FIG. 4, "name1" and "name2" are illustrated as information indicating the template name. In addition, the template information 41 illustrated in FIG. 4 indicates the setting values of "ColorMode", "Copies" (number of copies), and "MediaSizeName" (paper size) as the setting values related to the copying. If the template information 41 illustrated in FIG. 4 is applied, the copying in which the color mode is "black", the number of copies is "2", and the paper size is "A3" is set for the MFP.

The capability information 42 illustrated in FIG. 4 is stored in the storage device 13 in association with the template information 41. The capability information 42 is the capability information of a specific MFP that is a target for generating (registering) the template information 41. That is, the template information 41 is information created (registered) based on the setting value selected from the settable values indicated by the corresponding capability information 42.

Next, an operation of the mobile terminal 2 will be described.

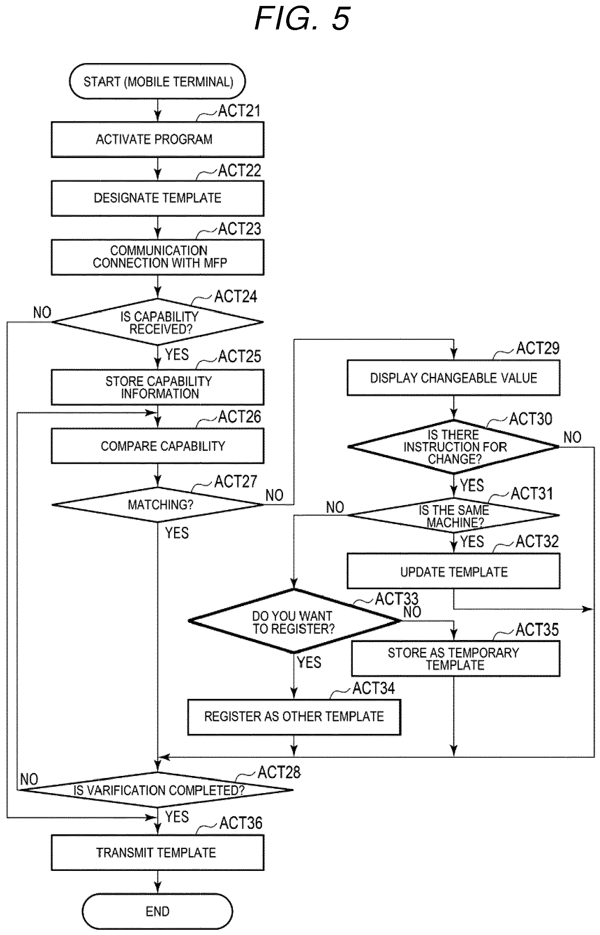

FIG. 5 is a flowchart for explaining the operation of the mobile terminal 2.

If the template held by the mobile terminal 2 is applied to the MFP 1, the user inputs an operation to activate an application for template management to the input device 27b. The processor 20 of the mobile terminal 2 activates the application for template management according to the operation of the user (ACT 21). If the application for template management is activated, the processor 20 accepts selection of the template information (ACT 22). For example, the processor 20 displays a list of information indicating the template held by the mobile terminal 2 on the display device 27a to accept the selection of the template.

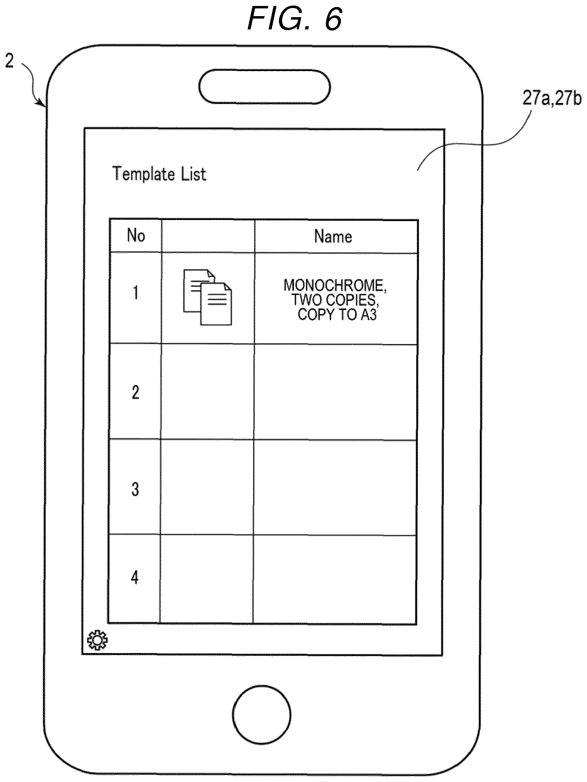

FIG. 6 is a diagram illustrating a display example of a template selection screen displayed by the display device 27a of the mobile terminal 2.

The example illustrated in FIG. 6 illustrates an example in which the template name included in the template information illustrated in FIG. 4 is displayed on the template selection screen. The template displayed on the selection screen as illustrated in FIG. 6 is selected by touching the display part by the user with the touch panel used as the input device 27b.

In a state where one template is selected, the processor 20 waits for communication connection with the MFP 1 by the communication device 24. After selecting the template with the input device 27b, the user brings the mobile terminal 2 close to the mobile terminal I/F 16 of the MFP 1 (presented in the communication range E). If the communication device 24 of the mobile terminal 2 enters the communication range E, the communication device 24 starts contactless communication with the mobile terminal I/F 16 of the MFP 1 (ACT 23). The processing procedures of ACTs 21, 22, and 23 may be changed. For example, the processing procedures of ACTs 22 and 23 may be exchanged. In addition, the processor 20 may activate the application for template management if the communication device 24 started contactless communication with the mobile terminal I/F 16 of the MFP 1.

If the contactless communication between the communication device 24 and the mobile terminal I/F 16 is started, the processor 20 accepts a capability file from the MFP 1. For example, if the contactless communication is started, the processor 20 transmits identification information (for example, a terminal identification number) of the mobile terminal 2 to the MFP 1. As will be described later, the MFP 1 determines the necessity to provide the capability file based on the identification information of the mobile terminal 2 that started contactless communication. If it is determined that the capability file is to be provided, the MFP 1 transmits the capability file to the mobile terminal 2.

The mobile terminal 2 may request the capability file from the MFP 1 or may not accept the capability file from the MFP 1. For example, the processor 20 may be set to request the capability file from the MFP by the application for template management. In this case, the processor 20 may request the capability file from the MFP which started contactless communication by the communication device 24. In addition, the processor 20 may be set not to accept the capability file from the MFP by the application for template management. In this case, if the processor 20 started contactless communication with the MFP by the communication device 24, the process may proceed to ACT 36. In addition, if the capability file from the MFP is not necessary, the processor 20 may notify the MFP which started contactless communication that the capability file is not necessary.

If the capability file is not transmitted from the MFP 1 (ACT 24, NO), the processor 20 transmits the template information selected by the user to the MFP 1 by the communication device 24 (ACT 36). Accordingly, in the MFP 1, setting according to the template information supplied from the mobile terminal 2 is executed. The processor 20 may also transmit job data such as a print job or a processing request together with the template information.

If the capability file is received from the MFP 1 (ACT 24, YES), the processor 20 temporarily holds the received capability file in the RAM 22 or the storage device 23 (ACT 25). The capability file received from the MFP includes information (capability information) indicating a list of values that can be set as the template information in the MFP. For each parameter of the selected template information, the processor 20 compares the capability information from the MFP with the capability information corresponding to the template information.

If there is a parameter whose pieces of capability information do not match (ACT 27, NO), the processor 20 displays a changeable setting value for the parameter (ACT 29). That is, if a setting value not included in the capability information corresponding to the template information exists in the capability information from the MFP, the processor 20 displays the value as a changeable setting value.

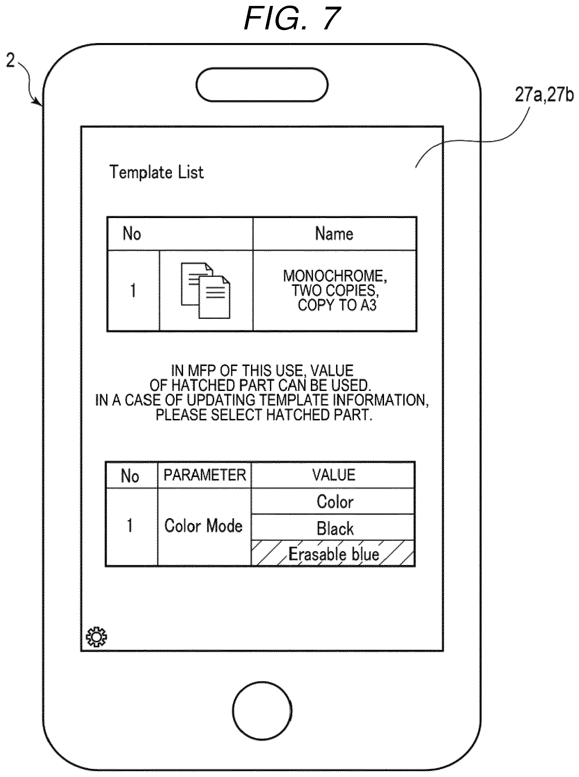

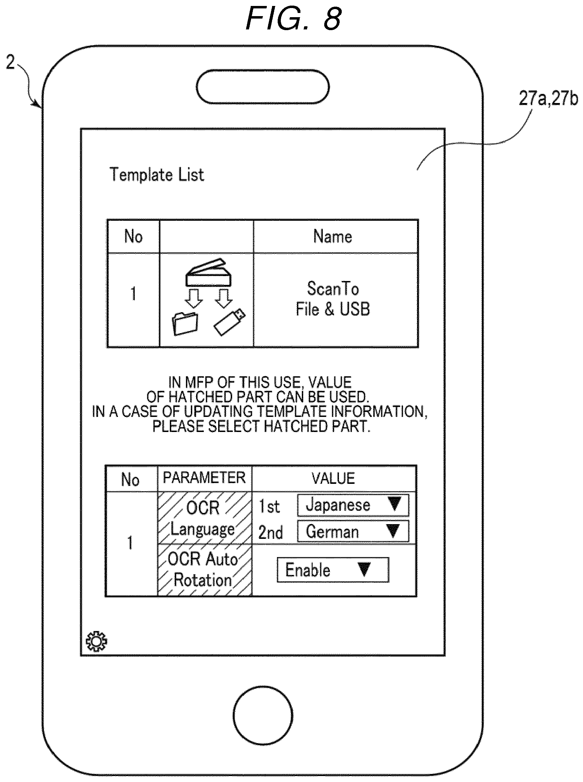

FIGS. 7 and 8 are diagrams illustrating display examples in which the display device 27a displays setting values (setting value selection screen) changeable based on the capability information from the MFP.

FIG. 7 illustrates a display example of changeable setting values (setting value selection screen) if template information for copying is selected. It is assumed that "erasable blue" is included in "colormode" of the capability information received from MFP and "erasable blue" is not included in "colormode" of the capability information corresponding to the template information. In this case, as illustrated in FIG. 7, the processor 20 displays a selection screen which can be changed to "erasable blue" as the color mode on the display device 27a.

FIG. 8 illustrates a display example of changeable setting values (setting value selection screen) if the template information for scanning is selected. If the MFP has an OCR function for a scanned image, the capability file received from the MFP includes OCR ("OCR Language" and "OCR Auto Rotation") as parameters of the scanning. If there is no OCR as the parameters of the scanning in the capability information corresponding to the selected template information, as illustrated in FIG. 8, the processor 20 displays a selection screen on which the OCR setting value can be selected on the display device 27a.

If the change of the value of a certain parameter is instructed (ACT 30, YES), the processor 20 determines whether the MFP as the transmission source of the capability file and the MFP as the capability information corresponding to the selected template information are the same machine (ACT 30). For example, the processor 20 determines whether or not the MFPs are the same machine based on whether or not the serial number included in the received capability file matches the serial number of the MFP included in the capability information corresponding to the template information. If it is determined that the MFPs are the same machine (ACT 31, YES), the processor 20 updates the value of the parameter in the template information (ACT 32). For a case where although the MFPs are the same machine, the pieces of capability information are different, it is assumed that the configuration of the MFP is changed due to the installation of optional equipment, an update of firmware, or the like. According to the above-described processing, it is possible to prompt a change of the template information if the configuration of the MFP is changed.

If it is determined that the MFPs are not the same machine (ACT 31, NO), the processor 20 determines whether to register the template information in which the value of the parameter is changed according to the selection of the user, as new template information (ACT 33). For example, the processor 20 displays a selection screen for inquiring whether to register the changed template information as the template information corresponding to the MFP in communication on the display device 27a. For example, if it is an MFP only to be temporarily used, the user selects template information (temporary template information) valid only for this time without registering the information as the template information. In addition, if the MFP is likely to be used in the future, the user selects to register as new template information corresponding to the MFP.

If it is determined to register the template information in which the value of the parameter is changed as new template information (ACT 33, YES), the processor 20 newly registers the changed template information (ACT 34). If the changed template information is registered as the new template information, the processor 20 also stores the capability information received from the MFP in association with the registered template information. If it is determined that the changed template information is not registered as the new template information (ACT 33, NO), the processor 20 holds the changed template information as temporary template information in the RAM 22 or the like (ACT 35).

Until the verification of the capabilities of all the parameters of the template information selected by the user is completed (ACT 28, NO), the processor 20 repeatedly executes the processing of ACTs 26 to 35. Accordingly, the processor 20 can verify all the parameters of the template information selected by the user based on the capability information of the MFP.

After verifying the capability information of all the parameters (ACT 28, YES), the processor 20 transmits the template information selected by the user or the template information changed (updated) according to the capability information from the MFP, to the MFP 1 (ACT 36).

Next, an operation of the MFP 1 will be described.

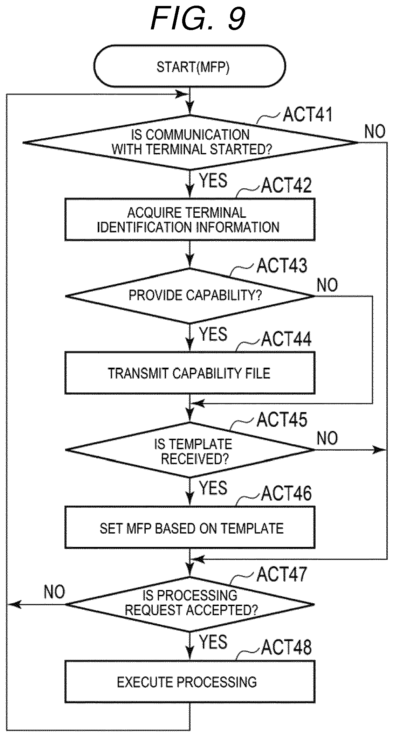

FIG. 9 is a flowchart for explaining an operation example of the MFP 1.

In a standby state, the processor 10 of the MFP 1 accepts contactless communication with the mobile terminal 2 by the mobile terminal I/F 16 (ACT 41). For example, the mobile terminal I/F 16 of the MFP 1 transmits a radio wave for contactless communication to the communication range E, and receives a response telegraphic message from the contactless communication device in the communication range E. If the communication device 24 of the mobile terminal 2 enters the communication range E, the communication device 24 transmits a response telegraphic message including the terminal identification information of the mobile terminal 2. The mobile terminal I/F 16 receives the response telegraphic message from the communication device 24 of the mobile terminal 2 to start contactless communication with the communication device 24 (ACT 41, YES).

If the mobile terminal I/F 16 starts contactless communication with the mobile terminal 2, the processor 10 acquires the terminal identification information of the mobile terminal 2 (ACT 42). For example, the processor 10 acquires a terminal identification number as the terminal identification information included in the response telegraphic message received by the mobile terminal I/F 16 from the communication device 24 of the mobile terminal 2.

If the terminal identification information is acquired, the processor 10 determines whether or not to provide the capability information of the MFP 1 to the mobile terminal 2 specified by the terminal identification information (ACT 43). For example, for each time contactless communication is performed, the processor 10 stores the terminal identification information received from the mobile terminal 2 in the storage device 13 as the log information. In this case, the processor 10 determines whether or not the capability file (a file indicating the capability information of the current MFP 1) is already transmitted to the mobile terminal 2 based on the past log information. If the capability file is already transmitted to the mobile terminal 2, the processor 10 determines that provision of the capability information is not necessary. In addition, if the capability file is not transmitted to the mobile terminal 2, the processor 10 determines that provision of capability information is necessary.

If it is determined to provide the capability information (ACT 43, YES), the processor 10 transmits the capability file stored in the storage device 13 to the mobile terminal 2 via the mobile terminal I/F 16 (ACT 44). After transmitting the capability file or after determining that capability information is not provided (ACT 43, NO), the processor 10 accepts the template information from the mobile terminal 2 that performs the contactless communication via the mobile terminal I/F 16 (ACT 45).

If the template information from the mobile terminal 2 is received (ACT 45, YES), the processor 10 sets the MFP 1 based on the received template information (ACT 46). After setting based on the template information, the processor 10 accepts the processing request in the set state based on the template information (ACT 47). If the processing request is input by the input device 18b or if the processing request is input via the NW I/F 17, the processor 10 executes the processing requested in the setting based on the template information (ACT 48).

For example, if the template information of the copying is received, the processor 20 sets the copying based on the template information. After setting the copying based on the template information, the processor 20 executes the copying in response to an instruction to start the copying in the operation panel 18. In addition, if the template information of the scanning is received, the processor 20 sets the scanning based on the template information. After setting the scanning based on the template information, the processor 20 executes the scanning in response to the instruction to start the scanning in the operation panel 18.

In addition, if the template information of the printing is received, the processor 20 sets the printing based on the template information. After setting the printing based on the template information, the processor 20 executes the printing based on the print job including the print data received via the NW I/F 17. The processor 20 may receive the print job together with the template information by contactless communication with the mobile terminal 2. In this case, the processor 20 executes the printing based on the print job following the setting based on the template information received from the mobile terminal 2.

As described above, the MFP as an image processing apparatus according to an embodiment holds the capability information indicating the list of the settable values. If the mobile terminal holding the template information is communicatively connected to the MFP, the MFP provides the capability information to the mobile terminal. After providing the capability information, the MFP is set according to the template information from the mobile terminal. The MFP provides the capability information to the mobile terminal, whereby the user operating the mobile terminal can update the template information according to the function of the MFP.

The MFP according to an embodiment is communicatively connected to the mobile terminal by contactless communication such as NFC. After providing the capability information to the mobile terminal connected by the contactless communication, the MFP acquires the template information from the mobile terminal. Accordingly, the user can acquire the capability information from the MFP only by holding the mobile terminal over a predetermined communication range of the MFP (or touching a predetermined position). As a result, the user can simply update the template information to be supplied to the MFP according to the capability information of the MFP actually used.

While certain embodiments have been described, these embodiments have been presented by way of example only, and are not intended to limit the scope of invention. Indeed, the novel apparatus and methods described herein may be embodied in a variety of other forms; furthermore, various omissions, substitutions and changes in the form of the apparatus and methods described herein may be made without departing from the scope of the inventions. The accompanying claims and their equivalents are intended to cover such forms or modifications as would fall within the scope of the inventions.

## Claims

1. An image processing apparatus, comprising:
a memory configured to store a capability file comprising capability information indicating a value that can be set as a parameter of processing;
an interface configured to communicate with a mobile terminal; and
a processor configured to perform setting based on template information acquired from the mobile terminal, after transmitting the capability file stored in the memory to the mobile terminal via the interface.

2. The apparatus according to claim 1,
wherein the interface performs near field communication.

3. The apparatus according to claim 2,
wherein the interface performs contactless communication.

4. The apparatus according to claim 1 or 2,
wherein the processor determines whether or not to transmit the capability file to a mobile terminal which initiates communication via the interface, and
if the processor determines to transmit the capability file, the processor transmits the capability file to the mobile terminal via the interface.

5. The apparatus according to claim 4, further comprising:
a second memory configured to store log information indicating the mobile terminal to which the capability file is already transmitted,
wherein the processor determines whether or not to transmit the capability file by determining whether or not the capability file is already transmitted to the mobile terminal that initiates the communication via the interface based on the log information.

6. A non-temporary computer readable storage medium storing a program for a mobile terminal, the program causing a processor to:
accept designation of template information indicating a value of a parameter set for an image processing apparatus from template information stored in a memory;
communicate with the image processing apparatus configured to perform setting based on designated template information;
receive a capability file comprising capability information indicating a value that is capable of being set as the parameter of processing executed by the image processing apparatus, from the image processing apparatus;
accept a change of the value of the parameter in the template information according to the capability file received from the image processing apparatus; and
when the change of the value of the parameter in the template information is instructed, transmit the template information comprising a value of a parameter changed according to the instruction to the image processing apparatus.

7. The medium according to claim 6,
wherein the program for the mobile terminal further causes a processor to:
confirm whether or not to change a value in a parameter in which capability information of a specific image processing apparatus stored in association with the template information and capability information included in the capability file received from the image processing apparatus do not match.

8. The medium according to claim 7,
wherein the program for the mobile terminal further causes a processor to:
update the template information stored in the memory to the template information comprising the value of the parameter changed according to the instruction, if an image processing apparatus of the capability information stored in association with the template information and an image processing apparatus of a transmission source of the capability file are the same machine.

9. The medium according to claim 8,
wherein the program for a mobile terminal further causes a processor to:
register the template information comprising the value of the parameter changed according to the instruction as new template information in the memory, if an image processing apparatus of the capability information stored in association with the template information and an image processing apparatus of a transmission source of the capability file are not the same machine.

10. The medium according to claim 8,
wherein the program for a mobile terminal further causes a processor to:
hold the template information including the value of the parameter changed according to the instruction as temporary template information, if an image processing apparatus of the capability information stored in association with the template information and an image processing apparatus of a transmission source of the capability file are not the same machine.

11. An image processing method, comprising:
storing in a memory a capability file comprising capability information indicating a value that can be set as a parameter of processing;
transmitting the capability file stored in the memory to the mobile terminal; and then
setting the value based on template information acquired from the mobile terminal.

12. The method according to claim 11,
wherein transmitting the capability file is performed using near field communication.

13. The method according to claim 12,
wherein transmitting the capability file is performed using contactless communication.

14. The method according to claim 11, further comprising:
determining whether or not to transmit the capability file to a mobile terminal which initiates communication; and
transmitting the capability file to the mobile terminal.

15. The method according to claim 14, further comprising:
storing log information indicating the mobile terminal to which the capability file is already transmitted; and
determining whether or not to transmit the capability file by determining whether or not the capability file is already transmitted to the mobile terminal that initiates communication based on the log information.
